# EUROPÄISCHE PATENTSCHRIFT

(11) **EP 3 870 853 B1**
(45) Veröffentlichungstag und Bekanntmachung des Hinweises auf die Patenterteilung: **07.09.2022**
(21) Anmeldenummer: 19795145.2
(22) Anmeldetag: 22.10.2019
(51) Int. Cl.: F04B 1/04, F04B 17/03, F04B 53/16, F16J 15/34, F04B 1/0448

(54) **ELEKTROHYDROSTATISCHER ANTRIEB MIT VERGRÖSSERTEM BETRIEBSBEREICH**
ELECTROHYDROSTATIC DRIVE WITH ENLARGED OPERATING AREA
ENTRAÎNEMENT ÉLECTROHYDROSTATIQUE À ZONE DE FONCTIONNEMENT ÉLARGIE

(30) Priorität: 23.10.2018 DE 102018126395
(43) Veröffentlichungstag der Anmeldung: 01.09.2021
(73) Patentinhaber: Moog GmbH, 71034 Böblingen (DE)
(72) Erfinder: BECHER, Dirk, 71154 Nufringen (DE); KENTSCHKE, Tino, 71263 Weil der Stadt (DE)
(74) Vertreter: Wittmann, Ernst-Ulrich
(86) Internationale Anmeldenummer: PCT/EP2019/078721
(87) Internationale Veröffentlichungsnummer: WO 2020/083907

(56) Entgegenhaltungen:
- DE-A1-102006 040 130
- DE-A1-102014 211 982
- DE-A1-102016 113 882
- DE-B- 1 258 692
- DE-T2- 60 304 504

## Beschreibung

Die vorliegende Erfindung betrifft einen elektrohydrostatischen Antrieb (EPU - Electro Hydrostatic Pump Unit) mit einer Gleitringdichtung.

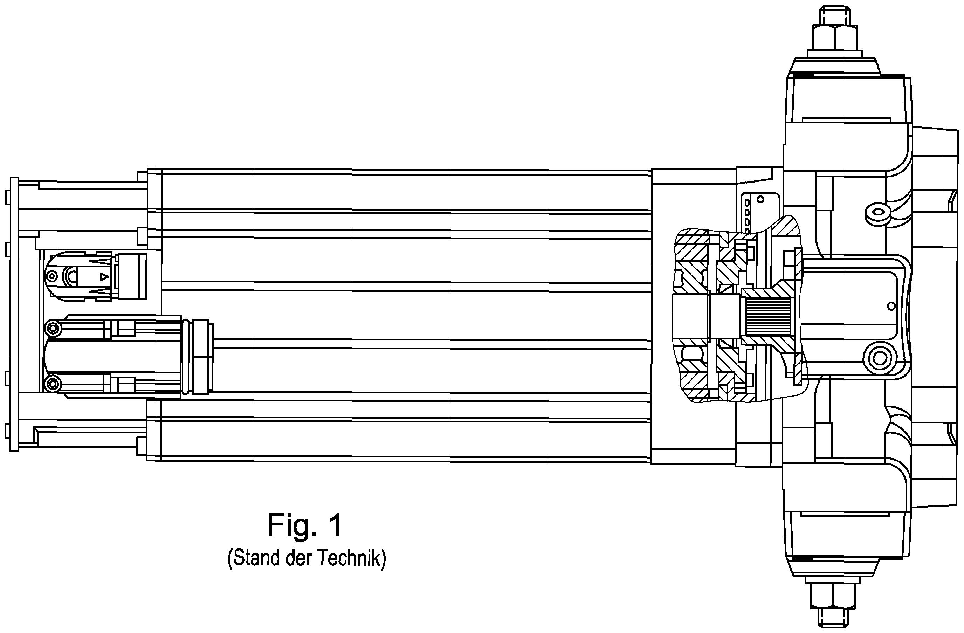

Elektrohydrostatische Antriebe sind im Stand der Technik bekannt. Unter einem elektrohydrostatischen Antrieb versteht man die direkte Kopplung eines elektrischen, drehzahlvariablen Antriebs mit einer hydrostatischen Pumpe. Der elektrische Antrieb stellt eine mechanische Antriebsleistung in Form einer Drehzahl und eines Drehmomentes bereit. Die bereitgestellte mechanische Leistung wird von der hydrostatischen Pumpe in eine hydraulische Abtriebsleistung umgesetzt, in Form eines Volumenstroms und eines Betriebsdruckes bzw. einer Druckdifferenz über die Arbeitsanschlüsse der hydrostatischen Pumpe. Der elektrohydrostatische Antrieb ist zudem in der Lage, im Motorbetrieb der hydrostatischen Pumpe eine hydraulische Antriebsleistung in eine mechanische Abtriebsleistung am elektrischen Antrieb zu wandeln. Im elektrohydrostatischen Antrieb erfolgt somit eine Wandlung von elektrischer Leistung in hydraulische Leistung oder Energie und umgekehrt. Für den Energietransport im hydraulischen Teil des Antriebsstrangs des elektrohydrostatischen Antriebs, wird eine Flüssigkeit, in der Regel Hydrauliköl, verwendet. Funktionsbedingt muss eine Trennung der Medien Hydraulikflüssigkeit innerhalb der hydrostatischen Pumpe und Luft innerhalb des elektrischen Antriebs erfolgen. Diese Abdichtung im Stand der Technik bekannten elektrohydrostatischen Antrieben erfolgt dadurch, dass an der Antriebswelle zwischen elektrischem Motor und hydrostatischer Pumpe ein Wellendichtring montiert ist. Die Abdichtung des Wellendichtrings erfolgt auf der nicht rotierenden, statischen Seite über einen Formschluss, beispielsweise im Gehäuse der hydrostatischen Pumpe oder dem elektrischen Antrieb. Eine weitere Abdichtung erfolgt dynamisch zur rotierenden Antriebswelle über eine Dichtlippe. Eine beispielhafte Abdichtung umfassend den Wellendichtring ist in der **Fig. 1** dargestellt.

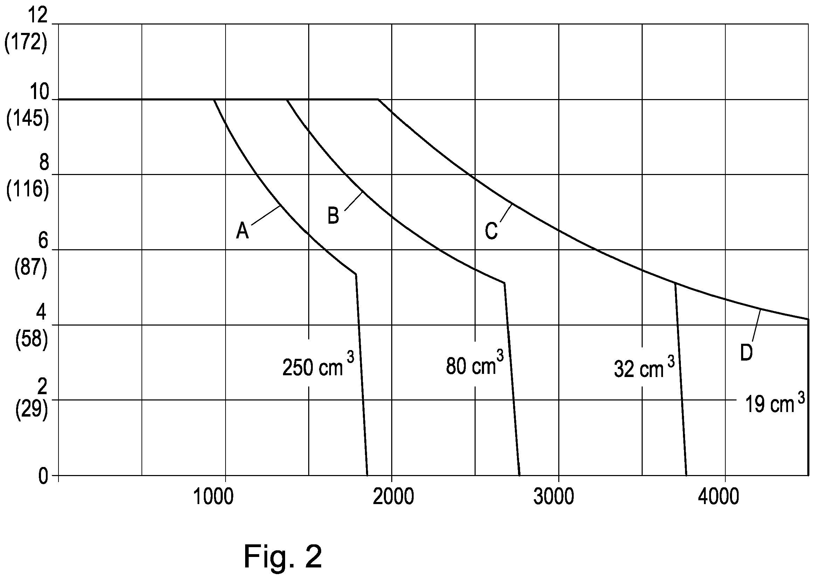

Einen elektrohydrostatischen Antrieb mit einem solchen Wellendichtring, wie dargestellt in **Fig. 1**, kann in einer speziellen Form bis zu einem maximalen Betriebsdruck bis 10 bar betrieben werden. Bei einer Erhöhung der Drehzahl der Antriebswelle kommt es allerdings in diesem Drehzahlbereich zu einer Reduzierung des maximalen Betriebsdrucks bis auf ca. 4 bar (siehe **Fig. 2**). Speziell für den Einsatz von elektrohydrostatischen Antrieben in einer autarken Achse mit integrierten Differentialzylinder ist es vorteilhaft, einen höheren Gehäusedruck über den gesamten Drehzahlbereich zur Verfügung zu haben.

Weiterhin nachteilig bei im Stand der Technik bekannten elektrohydrostatischen Antrieben mit Wellendichtring ist, dass der maximale Arbeitsdruck des Speichers und damit die maximale Druckdifferenz durch den maximalen drehzahlabhängigen Betriebsdruck des Wellendichtrings begrenzt ist. Der Speicher in hydraulischen System übernimmt die Funktion der Vorspannung des hydraulischen Systems und muss den gesamten Pendelvolumenstrom zwischen Kolben- und Stangenseite des Differentialzylinders aufnehmen. Die Größe bzw. das Volumen des Speichers hängt maßgeblich von der Größe des Pendelvolumenstromes zwischen Kolben- und Stangenseite des Differentialzylinders, der dynamischen/thermischen Nutzung (adiabatisch - isotherm) und der zulässigen Druckdifferenz zwischen minimaler und maximaler Füllung des Speichers ab. Somit würde sich das notwendige Speichervolumen bei einer höheren Druckdifferenz zwischen minimaler und maximaler Füllung des Speichers verringern. Durch die Begrenzung des Arbeitsdrucks bei elektrohydrostatischen Antrieben mit Wellendichtring sind entsprechend größer ausgelegte Speicher, mit mehr Fassungsvolumen notwendig, die zu einem funktionell komplexeren und kostenintensiveren Aufbau des Speichers und der Versorgung des hydraulischen Systems führen.

DE 10 2006 040130 A1 betrifft eine Förderpumpe mit einem drehzahlvariablen Antrieb und ist als einstufige Kreiselpumpe mit einem in einem Rotorraum eines Pumpengehäuses rotierenden Radialrad zum Fördern eines Fluids zwischen einem Pumpeneinlass und einem Pumpenauslass ausgebildet. Das Radialrad weist Förderkanäle auf und die Kreiselpumpe ist für den Teillastbetrieb ausgelegt.

DE 10 2014 211 982 A1 betrifft eine Kraftstoffhochdruckpumpe für ein Kraftstoffeinspritzsystem, insbesondere ein Common-Rail-Einspritzsystem, mit einer Antriebswelle, die in einer Lagerbohrung eines Gehäuseteils der Kraftstoffhochdruckpumpe drehbar gelagert ist, und einer Dichtungsanordnung, die zwischen der Antriebswelle und dem Gehäuseteil angeordnet ist. Die Dichtungsanordnung ist als Gleitringdichtung ausgebildet, die einen mit der Antriebswelle drehenden ersten Gleitring und einen mit dem Gehäuseteil verbundenen zweiten Gleitring umfasst, wobei der erste Gleitring über die Federkraft eines Federelements gegen den zweiten Gleitring axial vorgespannt ist.

DE 12 58 692 B betrifft ein elektrohydraulisches Hubgerät mit einer von einem Elektromotor angetriebenen hydrostatischen Pumpe und einem von der Druckflüssigkeit dieser Pumpe gespeisten Hubzylinder von geringem Durchmesser.

DE 603 04 504 T2 betrifft eine Gleitringdichtungsvorrichtung umfassend eine Napfdichtung, die aus einem elastischen Gummimaterial zwischen einer Montagefläche des Dichtungsrings und einer Stufenschulter-Installationsfläche hergestellt ist, wobei die Napfdichtung eine Stützplatte in einer integralen Weise hält und eine Stützfläche der Stützplatte in Bezug auf die Montagefläche des Dichtungsrings entgegengesetzt und im Wesentlichen parallel zu dieser weist.

DE 10 2016 113 882 A1 betrifft ein elektrohydrostatisches System mit einer von einem Elektromotor angetriebenen hydraulischen Maschine, die ein variables Volumen und/oder eine variable Drehzahl zur Bereitstellung eines Volumenstroms einer Hydraulikflüssigkeit aufweist, einem Differentialzylinder mit einer Kolbenfläche und mit einer Ringfläche und mindestens einem Ausgleichsbehälter. Das Antriebssystem hat einen geschlossenen hydraulischen Kreislauf und einen Überdruck gegenüber der Umgebung während des Betriebs mittels der hydraulischen Maschine und/oder einer Vorspannquelle. Das Antriebssystem sorgt für eine Bewegung des Zylinders in einer ersten Richtung mittels eines Volumenstroms der hydraulischen Maschine und eines Volumenstroms aus dem Ausgleichsbehälter und eine Bewegung in einer zweiten Richtung mittels eines Volumenstroms der hydraulischen Maschine und eines Volumenstroms in den Ausgleichsbehälter.

Ausgehend von diesem Stand der Technik, ist es die Aufgabe der vorliegenden Erfindung, die Nachteile des Standes der Technik wenigstens teilweise zu überwinden, bzw. den Stand der Technik zu verbessern.

Diese Aufgabe wird gemäß einem ersten Aspekt der vorliegenden Erfindung durch einen elektrohydrostatischen Antrieb mit den in Patentanspruch 1 angegebenen Merkmalen gelöst. Bevorzugte Ausführungsformen und Abwandlungen sind Gegenstand der Unteransprüche.

Die Erfindung schafft gemäß einem ersten Aspekt einen elektrohydrostatischen Antrieb umfassend einen elektromechanischen Antrieb mit einer rotierenden Antriebswelle und einer ersten Aufnahmeeinheit, wobei der elektromechanische Antrieb in der ersten Aufnahmeeinheit angeordnet ist.

Der elektromechanische Antrieb umfasst weiterhin eine hydrostatische Pumpe und eine zweite Aufnahmeeinheit, wobei die hydrostatische Pumpe in der zweiten Aufnahmeeinheit angeordnet ist und die zweite Aufnahmeeinheit ein Transportfluid enthält.

Ferner sind die erste Aufnahmeeinheit und die zweite Aufnahmeeinheit zueinander in Kontakt stehend angeordnet, so dass der elektromechanische Antrieb und die hydrostatische Pumpe über die Antriebswelle miteinander verbunden sind.

Der elektromechanische Antrieb umfasster weiterhin eine Gleitringdichtung, wobei die Gleitringdichtung entlang der Erstreckungsrichtung der Antriebswelle, zwischen dem elektromechanischen Antrieb und der hydrostatische Pumpe derart angeordnet ist, dass die erste Aufnahmeeinheit mit dem elektromechanischen Antrieb und die zweite Aufnahmeeinheit mit der hydrostatische Pumpe durch die Gleitringdichtung gegeneinander fluiddichtend entlang der rotierenden Antriebswelle verbunden sind.

Elektrohydrostatische Antriebe zeichnen sich durch ihre kompakte Bauweise aus und sind drehzahlregelbar. Die erste Aufnahmeeinheit stellt den Bauraum zur Aufnahme des elektromechanischen Antriebs dar und umfasst zusätzlich als füllendes Medium Luft. Die zweite Aufnahmeeinheit stellt den Bauraum zur Aufnahme der Pumpeneinheit dar und ist zusätzlich mit einem Transportfluid, vorzugsweise mit einem hydraulischen Mineralöl gefüllt. Zwischen der ersten Aufnahmeeinheit und der zweiten Aufnahmeeinheit ist vorzugsweise ein dritter Bauraum ausgebildet, in dem die Gleitringdichtung entlang der Erstreckungsrichtung der Antriebswelle angeordnet ist, die die erste Aufnahmeeinheit und die zweite Aufnahmeeinheit gegeneinander fluiddichtend verbindet.

In einer Ausführungsform umfasst die Gleitringdichtung einen Gleitring, einen Gleitringträger, eine Anpressfeder und einen Gegenring, wobei die Anpressfeder einen Gegendruck auf den Gleitringträger derart ausübt, dass der Gleitring mittels dem über den Gleitringträger bereitgestellten Gegendruck an dem Gegenring entlang der rotierenden Antriebsache fluiddicht anliegt.

In einer Ausführungsform umfasst die hydrostatische Pumpe eine Buchse zur verspannenden Aufnahme der Antriebswelle.

In einer Ausführungsform umfasst die hydrostatische Pumpe einen Gehäuseinnendruck in einem Bereich von 4 bis 30 bar, insbesondere in einem Bereich von 10 bis 25 bar, vorzugsweise von 20 bar.

Die Erfindung schafft ferner gemäß einem weiteren Aspekt ein elektrohydrostatisches Antriebssystem mit den in Patentanspruch 6 angegebenen Merkmalen.

Die Erfindung schafft gemäß einem zweiten Aspekt ein elektrohydrostatisches Antriebssystem umfassend wenigstens einen elektrohydrostatischen Antrieb gemäß einem der Patentansprüche 1 bis 5 und einen Steuerblock für das Ansteuern eines Aktuators. Bevorzugte Ausführungsformen und Abwandlungen sind Gegenstand der Unteransprüche.

In einer Ausführungsform ist der Aktuator ein hydraulischer Zylinder, insbesondere ein Differentialzylinder.

Gemäß einem weiteren Aspekt der vorliegenden Erfindung kann das elektrohydrostatische Antriebssystem gemäß dem zweiten Aspekt der vorliegenden Erfindung für den Antrieb eines Eilgangs und/oder Kraftgangs eines hydraulischen Zylinders und/oder einer Pressanordnung, wie zum Beispiel einer Strangpresse oder einer Tiefziehpresse verwendet werden.

Der vorliegenden Erfindung liegt die Kenntnis zugrunde, dass elektrohydrostatische Antriebe mit einer Gleitringdichtung bei einer bauartbedingten maximalen Drehzahl einen höheren Druck für hydraulische Anwendungen, beispielsweise zum Antrieb eines Differentialzylinders, bereitstellen können, bevor ein Verschleiß und/oder ein Verlust der Dichtwirkung der Dichtung eintritt. Bei Leckage und einem Übertritt des Mineralöls in die erste Aufnahmeeinheit mit dem elektromechanischen Antrieb, hätte dies die Zerstörung des elektromechanischen Antriebs zur Folge.

In vorteilhafterweise Weise kann das 5-7fache des Druckes eines elektrohydrostatischen Antriebs mit einem Wellendichtring durch einen elektrohydrostatischen Antrieb mit Gleitringdichtung abgerufen werden. Somit werden das Einsatzfeld und der Anwendungsumfang des elektrohydrostatischen Antriebs erhöht.

Eine Beschädigung bzw. Zerstörung der Dichtung wird in vorteilhafter Weise vermieden, da eine Gleitringdichtung robuster gegen mechanische Belastung ist, insbesondere im Kontaktbereich von dynamischen und statischen Bauteilen.

Zudem ist vorteilhaft, dass eine Gleitringdichtung bei Sonderflüssigkeiten eingesetzt werden kann und somit abdichtend bei chemischen Flüssigkeiten sind.

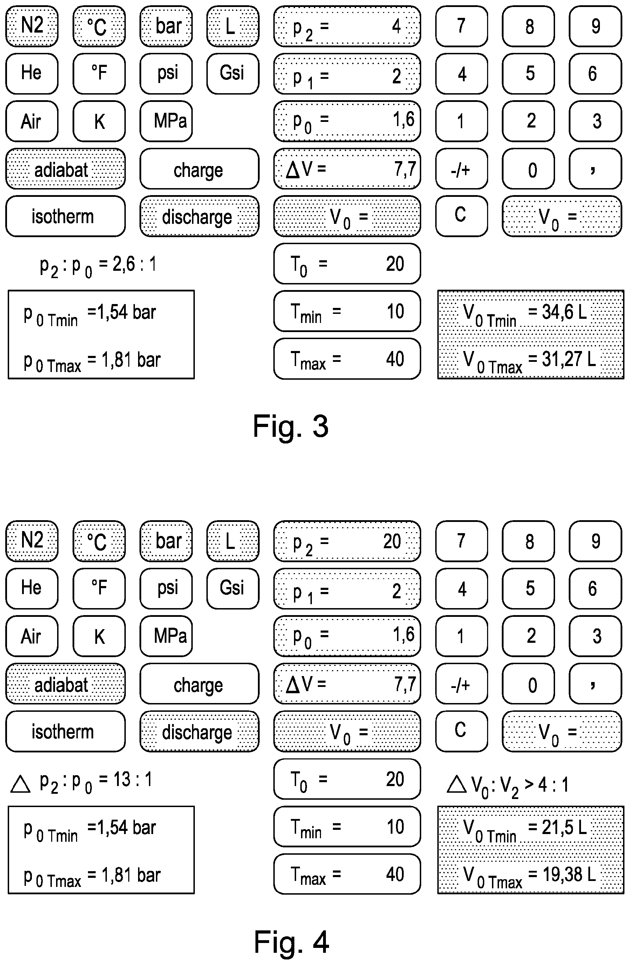

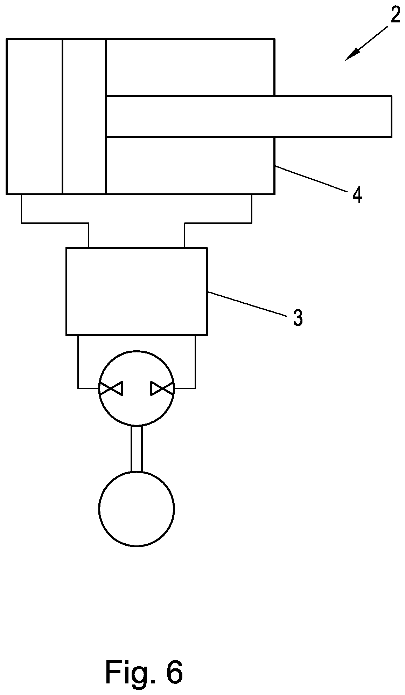

In vorteilhafter Weise kann ein hydraulischer Aktuator, beispielsweise ein Differentialzylinder bei verringertem Speichervolumen betrieben werden. Ein Differentialzylinder umfasst bauartbedingt zwei mit Druck beaufschlagbare Flächen unterschiedlicher Größe. Ein Differentialzylinder ist in der **Fig. 6** dargestellt. Die linke Seite des Differentialzylinders umfasst eine größere mit Druck zu beaufschlagende Fläche als die rechte Seite des Differentialzylinders umfassend die Zylinderstange. Diesbezüglich ergeben sich unterschiedliche Volumenströme zur Betätigung des Differentialzylinders, bzw. wird ein größererVolumenstrom benötigt, um den Differentialzylinder zu betätigen, als Volumen über die rechte Seite in das hydraulische System abgegeben wird. Zudem wird weniger Volumenstrom zum Betätigen des Differentialzylinders an der rechten Seite benötigt, als über die linke Seite an das hydraulische System abgegeben wird. Diese Differenz von Volumenstrom wird durch einen hydraulischen Speicher, beispielsweise einen Ausgleichsbehälter, bereitgestellt. Dieser hydraulische Speicher ist vorzugsweise mit einem einstellbaren Druck vorgespannt. Je größer der Unterschied an Fläche ist, umso mehrVolumen und mehr Speicher muss bereitgestellt werden, um einen Ausgleich zu realisieren. Mit einem höheren Druck im System, bereitgestellt durch den elektrohydrostatischen Antrieb, kann der zum Vorspannen notwendige Speicher, wie dargestellt in den **Fig. 3** und **Fig. 4** in vorteilhafter Weise reduziert werden. Die Baugröße des Speichers und somit des hydraulischen Systems werden reduziert und Kosten für das hydraulische System gesenkt. Zudem kann das hydraulische Gesamtsystem kompakter ausgestaltet werden.

Die Erfindung wird nachfolgend anhand verschiedener Ausführungsformen erläutert, wobei darauf hingewiesen wird, dass durch dieses Beispiel Abwandlungen beziehungsweise Ergänzungen, wie sie sich für den Fachmann unmittelbar ergeben, mit umfasst sind. Darüber hinaus stellt dieses bevorzugte Ausführungsbeispiel keine Beschränkung der Erfindung in der Art dar, dass Abwandlungen und Ergänzungen im Umfang der vorliegenden Erfindung liegen.

Dabei zeigen:
- **Fig. 1**: einen elektrohydrostatischen Antrieb mit einem Wellendichtring;
- **Fig. 2**: ein Diagramm des Betriebsbereichs eines Wellendichtrings;
- **Fig. 3**: den Bedarf an Speichergröße des Speichers bei der Verwendung eines Wellendichtrings;
- **Fig. 4**: den Bedarf an Speichergröße des Speichers bei der Verwendung einer Gleitringdichtung;
- **Fig. 5**: einen elektrohydrostatischen Antrieb mit einer Gleitringdichtung gemäß einer Ausführungsform der vorliegenden Erfindung;
- **Fig. 6**: ein elektrohydrostatisches Antriebssystem mit einem elektrohydrostatischen Antrieb gemäß einer Ausführungsform der vorliegenden Erfindung.

**Fig. 1** zeigt einen elektrohydrostatischen Antrieb mit einem im Stand der Technik bekannten Wellendichtring. Der elektrohydrostatische Antrieb umfasst eine erste Aufnahmeeinheit mit einem elektromechanischen Antrieb und eine zweite Aufnahmeeinheit mit einer Pumpeneinheit. Der Wellendichtring ist zwischen dem elektromechanischen Antrieb und der Pumpeneinheit angeordnet, so dass die erste Aufnahmeeinheit und die zweite Aufnahmeeinheit durch den Wellendichtring fluiddichtend entlang der rotierenden Antriebswelle verbunden sind. Der Wellendichtring dichtet die erste Aufnahmeeinheit gegen Eintritt von Mineralöl gegenüber der zweiten Aufnahmeeinheit bis zu einem Druck von 10bar bei einer bauartbedingten Drehzahl ab. Ab dem Erreichen einer bauartbedingten maximalen Drehzahl muss der Druck reduziert werden, da der Wellendichtring durch die mechanische Belastung ein Abdichten bei zu hohem Druck nicht mehr gewährleistet.

**Fig. 2** zeigt ein Diagramm des Betriebsbereichs eines Wellendichtrings. Die Ordinatenachse des Diagramms beschreibt den zulässigen maximalen Druck in der zweiten Aufnahmeeinheit 21 mit der Pumpeneinheit 20. Der maximal zulässige Druck in einem elektrohydrostatischen Antrieb mit Wellendichtring beträgt 10 bar. Die Abszissenachse des Diagramms beschreibt die Drehzahl der Antriebswelle in Umdrehung pro Minute (U/min). In dem Diagramm der **Fig. 2** sind vier Kennlinien (A, B, C, D) für vier elektrohydrostatische Antriebe mit Wellendichtring in unterschiedlicher Baugröße (Pumpenfördervolumina 250cm³, 80cm³, 32cm³, 19cm³) dargestellt.

Der Wellendichtring hat die Aufgabe, eine Medientrennung über die rotierende Antriebswelle zwischen der ersten Aufnahmeeinheit und der zweiten Aufnahmeeinheit zu realisieren. Der zulässige maximale Druck in der zweiten Aufnahmeeinheit ist abhängig von der Baugröße der Pumpeneinheit (Durchmesser der Antriebswelle) und der Drehzahl der Antriebswelle (Relativgeschwindigkeit zwischen Antriebswelle und Dichtlippe). Je größer die Baugröße der Pumpeneinheit, umso geringer ist die zulässige maximale Drehzahl.

Für beispielsweise einen elektrohydrostatischen Antrieb mit der Baugröße von 19 cm³ (EPU019) beträgt der maximale Druck in der zweiten Aufnahmeeinheit bis zu einer Drehzahl von ca. 1.900 U/min 10 bar. Bei einer weiteren Erhöhung der Drehzahl fällt der maximal zulässige Druck entsprechend der Kennlinie D ab und reduziert sich bei einer Drehzahl von 4.500 U/min auf einen Wert von 4 bar. Durch die Erhöhung der Drehzahl erhöht sich auch die auf den Wellendichtring einwirkende mechanische Belastung, beispielsweise durch Reibung. Somit muss der Druck innerhalb der zweiten Aufnahmeeinheit gesenkt werden, um eine Beschädigung der Dichtung und somit Eintritt von Mineralöl in die erste Aufnahmeeinheit zu vermeiden. Speziell für den Einsatz eines elektrohydrostatischen Antriebs in einer autarken mit einem integrierten Differentialzylinder ist es jedoch wünschenswert, einen höheren Gehäusedruck über den gesamten Drehzahlbereich zur Verfügung zu haben. In vorteilhafter Weise kann bei einem elektrohydrostatischen Antrieb mit einer Gleitringdichtung ein Gehäusedruck in einem Bereich von 4 bis 30 bar, insbesondere in einem Bereich von 10 bis 25 bar, vorzugsweise von 20 bar realisiert werden. Somit kann bei bauartbedingter maximaler Drehzahl, beispielsweise 4500 U/min, ein Vielfaches des Drucks, als bei elektrohydrostatischen Antrieben mit einem Wellendichtring (beispielsweise 5-7fache), für bestimmte hydraulische Anwendungen bereitgestellt werden.

**Fig. 3** und **Fig. 4** zeigen eine Simulation zur Speicherauslegung eines Speichervolumens in einem hydraulischen System. Insbesondere zeigt die **Fig. 3** die Auslegung eines Speichervolumens in einem hydraulischen System mit einem elektrohydrostatischen Antrieb umfassend einen Wellendichtring und die **Fig. 4** die Auslegung eines Speichervolumens in einem hydraulischen System mit einem elektrohydrostatischen Antrieb umfassend eine Gleitringdichtung bzw. wird ein elektrohydrostatischer Antrieb mit einem anliegenden Druck von 20bar simuliert. Für die Simulation der Speicherauslegung wurde das Programm "asp-light" der Firma Hydac eingesetzt. Bei dem Einsatz eines Differentialzylinders mit den Abmaßen: Kolbendurchmesser = 203,2mm, Stangendurchmesser=88,9mm, Hub=1.238,3mm mit einem elektrohydrostatischen Antrieb, ergibt sich beim Einsatz eines Wellendichtrings zur Abdichtung ein notwendiges Speichervolumen (Gas: N2, p2 = 4 bar, p1 = 2 bar, adiabatisch, Tmin = 10°C, Tmax = 40°C, To = 20°C) von 35l.

Bei der Erhöhung des Druckes p2, dargestellt in **Fig. 4****,** auf 20 bar ergibt sich eine notwendige Speichergröße von 21,5l und somit eine Differenz im Speichervolumen in einem Bereich von 12,8l bis 13,2l. Das führt in vorteilhafter Weise zu einem kleineren notwendigen Speicher und damit geringerem Einbauraum. Ferner kann es zu einer Kosteneinsparung im hydraulischen Gesamtsystem führen. Weiterhin vorteilhaft ist, dass elektrohydrostatische Antriebe mit einer Gleitringdichtung in hydraulischen Systemen eingesetzt werden können, die eine kompakte Bauweise der Antriebe aufgrund Mangels an verfügbarem Platz voraussetzen und dennoch für bestimmte Funktionen einen entsprechend hohen Druck benötigen. Dies ergibt sich daraus, das die dezentrale, autarke Achse noch kompakter durch den kleiner auszulegenden Speicher, ausgeführt werden kann.

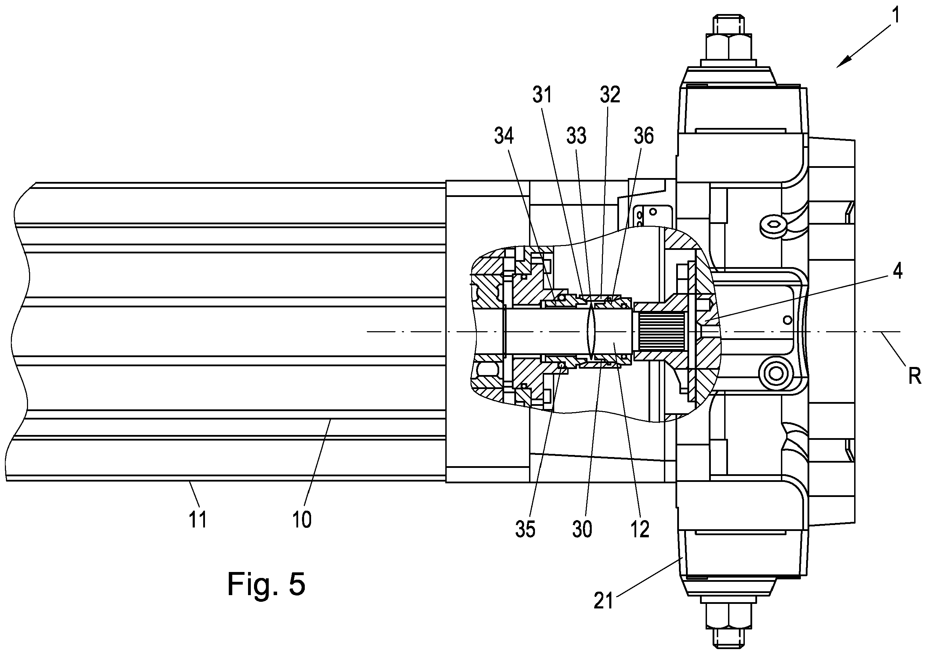

**Fig. 5** zeigt einen elektrohydrostatischen Antrieb 1 mit einer Gleitringdichtung 30 gemäß einer Ausführungsform der vorliegenden Erfindung. Der prinzipielle Aufbau einer Gleitringdichtung 30 ist im Vergrößerungsabschnitt der Fig. 5 dargestellt. Der elektrohydrostatischer Antrieb 1 umfasst einen elektromechanischen Antrieb 10 mit einer rotierenden Antriebswelle 12 und einer ersten Aufnahmeeinheit 11, wobei der elektromechanische Antrieb 10 in der ersten Aufnahmeeinheit 11 angeordnet ist. Ferner umfasst der elektrohydrostatische Antrieb 1 eine Pumpeneinheit 20 und eine zweite Aufnahmeeinheit 21, wobei die Pumpeneinheit 20 in der zweiten Aufnahmeeinheit 21 angeordnet ist und die zweite Aufnahmeeinheit 21 ein Transportfluid, beispielsweise ein Mineralöl enthält. Die erste Aufnahmeeinheit 11 und die zweite Aufnahmeeinheit 21 sind zueinander in Kontakt stehend angeordnet, so dass der elektromechanische Antrieb 10 und die Pumpeneinheit 20 über die Antriebswelle 12 miteinander verbunden sind. Ferner umfasst der elektrohydrostatische Antrieb 1 eine Gleitringdichtung 30, wobei die Gleitringdichtung 30 entlang der Erstreckungsrichtung R der Antriebswelle 12, zwischen dem elektromechanischen Antrieb 10 und der Pumpeneinheit 20 derart angeordnet ist, dass die erste Aufnahmeeinheit 11 mit dem elektromechanischen Antrieb 10 und die zweite Aufnahmeeinheit 21 mit der Pumpeneinheit 20 durch die Gleitringdichtung 30 gegeneinander fluiddichtend entlang der rotierenden Antriebswelle 12 verbunden sind.

Der elektrohydrostatische Antrieb 1 ist ein Kompaktantrieb bei dem der elektromechanische Antrieb 10 und die Pumpeneinheit 20 eine geschlossene Einheit bilden und die Gleitringdichtung 30 dazu dient, eine Medientrennung (Luft - Hydraulikflüssigkeit) über die rotierende Antriebswelle 12 zwischen der ersten Aufnahmeeinheit 11 und der zweiten Aufnahmeeinheit 21 zu realisieren.

Die Gleitringdichtung 30 umfasst einen Gleitring 31, einen Gleitringträger32, eine Anpressfeder 33 und einen Gegenring 34, wobei die Anpressfeder 33 einen Gegendruck auf den Gleitringträger 32 derart ausübt, dass der Gleitring 31 mittels dem über den Gleitringträger32 bereitgestellten Gegendruck an dem Gegenring 34 entlang der rotierenden Antriebsache 12 fluiddicht anliegt. Die statische Abdichtung zur ersten Aufnahmeeinheit 11 oder zur zweiten Aufnahmeeinheit 21 erfolgt über einen O-Ring35 zum Gegenring 34. Auf der Antriebswelle 12 ist ein Mitnehmer36 montiert, der mit der Drehzahl der Antriebswelle rotiert. Eine statische O-Ring Abdichtung erfolgt zum einen zwischen der Antriebswelle 12 und dem Mitnehmer36 und zum anderen zwischen Mitnehmer36 und Gleitringträger32. Der eigentliche Gleitring 31 wird über eine Anpressfeder 33 im Gleitringträger32 gegen den Gegenring 34 gedrückt und realisiert die dynamische Abdichtung zwischen Gleitring 31 und Gegenring 34.

Die Gleitringdichtung 30 ist in der Anzahl der einzelnen Elemente aufwendiger ausgestaltet und weist baulich und strukturell bedingt größere axiale Abmessungen auf, als wie der in der **Fig. 1** dargestellte Wellendichtring. Durch die größeren Abmessungen der Gleitringdichtung vergrößert sich die Gesamtlänge des elektrohydrostatischen Antriebs im Vergleich zu der Ausführung eines elektrohydrostatischen Antriebs umfassend einen Wellendichtring. Die Antriebswelle 12 des elektromechanischen Antriebs 10 des elektrohydrostatischen Antriebs 1 mit Gleitringdichtung 30 und derVerbindungsflansch zwischen dem elektromechanischen Antrieb 10 und der Pumpeneinheit 20 sind zur Aufnahme der Gleitringdichtung 30 entlang der Erstreckungsrichtung R der Antriebswelle 12 länger ausgeführt. Ferner umfasst dies eine bauliche und strukturelle Umgestaltung der ersten Aufnahmeeinheit 11 und zweiten Aufnahmeeinheit 21, was eine entsprechende Vergrößerung und Anpassung der ersten Aufnahmeeinheit 11 und der zweiten Aufnahmeeinheit 12 umfasst.

**Fig. 6** zeigt ein elektrohydrostatisches Antriebssystem 2 umfassend wenigstens einen elektrohydrostatischen Antrieb 1 und einen Steuerblock 3 für das Ansteuern eines Aktuators 4. Der Aktuator 4 ist ein hydraulischer Zylinder, insbesondere ein Differentialzylinder. Der Differentialzylinder kann mit einem Werkzeug verbunden sein. Das elektrohydrostatische Antriebssystem 2 umfasst ferner einen Hydrospeicher (Ausgleichsspeicher) (nicht dargestellt) zum Ausgleich des Pendelvolumens.

### Bezugszeichenliste

- 1: elektrohydrostatischer Antrieb
- 2: elektrohydrostatisches Antriebssystem
- 3: Steuerblock
- 4: Aktuator
- 10: elektromechanischer Antrieb
- 11: erste Aufnahmeeinheit
- 12: Antriebswelle
- 20: Pumpeneinheit
- 21: zweite Aufnahmeeinheit
- 22: Buchse
- 30: Gleitringdichtung
- 31: Gleitring
- 32: Gleitringträger
- 33: Anpressfeder
- 34: Gegenring
- 35: O-Ring
- 36: Mitnehmer
- A-D: Drehzahlkennlinien

## Patentansprüche

1. Elektrohydrostatischer Antrieb (1) umfassend:
einen elektromechanischen Antrieb (10) mit einer rotierenden Antriebswelle (12) und einer ersten Aufnahmeeinheit (11), wobei der elektromechanische Antrieb (10) in der ersten Aufnahmeeinheit (11) angeordnet ist;
eine hydrostatische Pumpe (20) und eine zweite Aufnahmeeinheit (21), wobei die hydrostatische Pumpe (20) in der zweiten Aufnahmeeinheit (21) angeordnet ist und die zweite Aufnahmeeinheit (21) ein Transportfluid enthält, und
die erste Aufnahmeeinheit (11) und die zweite Aufnahmeeinheit (21) zueinander in Kontakt stehend angeordnet sind, so dass der elektromechanische Antrieb (10) und die hydrostatische Pumpe (20) über die Antriebswelle (12) miteinander verbunden sind,
**dadurch gekennzeichnet, dass**
der elektrohydrostatische Antrieb (1) ferner eine Gleitringdichtung (30) umfasst, wobei die Gleitringdichtung (30) entlang der Erstreckungsrichtung (R) der Antriebswelle (12), zwischen dem elektromechanischen Antrieb (10) und der hydrostatischen Pumpe (20) derart angeordnet ist, dass die erste Aufnahmeeinheit (11) mit dem elektromechanischen Antrieb (10) und die zweite Aufnahmeeinheit (21) mit der hydrostatischen Pumpe (20) durch die Gleitringdichtung (30) gegeneinander fluiddicht wenigstens entlang der rotierenden Antriebswelle (12) verbunden sind.

2. Elektrohydrostatischer Antrieb (1) gemäß Anspruch 1, wobei die Gleitringdichtung (30) einen Gleitring (31), einen Gleitringträger (32), eine Anpressfeder (33) und einen Gegenring (34) umfasst, wobei die Anpressfeder (33) einen Gegendruck auf den Gleitringträger (32) derart ausübt, dass der Gleitring (31) mittels dem über den Gleitringträger (32) bereitgestellten Gegendruck an dem Gegenring (34) entlang der rotierenden Antriebsache (12) fluiddicht anliegt.

3. Elektrohydrostatischer Antrieb (1) gemäß einem der vorhergehenden Ansprüche 1 bis 2, wobei die hydrostatische Pumpe (20) eine Buchse (22) zur verspannenden Aufnahme der Antriebswelle (12) umfasst.

4. Elektrohydrostatischer Antrieb (1) gemäß einem der vorhergehenden Ansprüche 1 bis 3, wobei die hydrostatische Pumpe (20) einen Gehäuseinnendruck in einem Bereich von 4 bis 30 bar, insbesondere in einem Bereich von 10 bis 25 bar, vorzugsweise von 20 bar umfasst.

5. Elektrohydrostatisches Antriebssystem (2) umfassend wenigstens einen elektrohydrostatischen Antrieb (1) gemäß einem der vorhergehenden Ansprüche 1 bis 4 und einen Steuerblock (3) für das Ansteuern eines Aktuators (4).

6. Elektrohydrostatisches Antriebssystem (2) gemäß Anspruch 5, wobei der Aktuator (4) ein hydraulischer Zylinder, insbesondere ein Differentialzylinder ist.

7. Verwendung eines elektrohydrostatischen Antriebssystems (2) gemäß Anspruch 6 für den Antrieb eines Eilgangs und/oder Kraftgangs eines hydraulischen Zylinders und/oder einer Pressanordnung, wie zum Beispiel einer Strangpresse oder einer Tiefziehpresse.

## Claims

1. An electrohydrostatic drive (1) comprising:
an electromechanical drive (10) with a rotating drive shaft (12) and a first receiving unit (11), wherein the electromechanical drive (10) is arranged in the first receiving unit (11);
a hydrostatic pump (20) and a second receiving unit (21), wherein the hydrostatic pump (20) is arranged in the second receiving unit (21) and the second receiving unit (21) contains a transport fluid, and
the first receiving unit (11) and the second receiving unit (21) are arranged in contact with one another so that the electromechanical drive (10) and the hydrostatic pump (20) are connected to one another via the drive shaft (12),
**characterized in that**
the electrohydrostatic drive (1) also comprises a slide ring seal (30), wherein the slide ring seal (30) is arranged along the extension direction (R) of the drive shaft (12), between the electromechanical drive (10) and the hydrostatic pump (20), such that the first receiving unit (11) with the electromechanical drive (10) and the second receiving unit (21) with the hydrostatic pump (20) are connected in a fluid-tight manner with respect to one another, at least along the rotating drive shaft (12), by the slide ring seal (30).

2. The electrohydrostatic drive (1) according to claim 1, wherein the slide ring seal (30) comprises a slide ring (31), a slide ring carrier (32), a compression spring (33), and a counter ring (34), wherein the compression spring (33) exerts a counterpressure on the slide ring carrier (32) such that the slide ring (31) rests on the counter ring (34) in a fluid-tight manner along the rotating drive axle (12) by means of the counterpressure provided via the slide ring carrier (32).

3. The electrohydrostatic drive (1) according to one of the preceding claims 1 to 2, wherein the hydrostatic pump (20) comprises a bushing (22) for receiving the drive shaft (12) in a clamping manner.

4. The electrohydrostatic drive (1) according to one of the preceding claims 1 to 3, wherein the hydrostatic pump (20) comprises a housing internal pressure in a range from 4 to 30 bar, in particular in a range from 10 to 25 bar, preferably of 20 bar.

5. An electrohydrostatic drive system (2) comprising at least one electrohydrostatic drive (1) according to one of the preceding claims 1 to 4 and a control block (3) for controlling an actuator (4).

6. The electrohydrostatic drive system (2) according to claim 5, wherein the actuator (4) is a hydraulic cylinder, in particular a differential cylinder.

7. A use of an electrohydrostatic drive system (2) according to claim 6 for driving a rapid traverse and/or power mode of a hydraulic cylinder and/or of a press assembly, such as an extruder or a deep drawing press.

## Revendications

1. Entraînement électrohydrostatique (1) comprenant :
un entraînement électromécanique (10) comprenant un arbre d'entraînement (12) rotatif et une première unité de réception (11), l'entraînement électromécanique (10) étant disposé dans la première unité de réception (11) ;
une pompe hydrostatique (20) et une deuxième unité de réception (21), la pompe hydrostatique (20) étant disposée dans la deuxième unité de réception (21) et la deuxième unité de réception et la deuxième unité de réception (21) contenant un fluide de transport, et
la première unité de réception (11) et la deuxième unité de réception (21) étant disposées en contact l'une avec l'autre, de telle sorte que l'entraînement électromécanique (10) et la pompe hydrostatique (20) soient connectés l'un à l'autre par le biais de l'arbre d'entraînement (12),
**caractérisé en ce que**
l'entraînement électrohydrostatique (1) comprend en outre une garniture mécanique (30), la garniture mécanique (30) étant disposée le long de la direction d'extension (R) de l'arbre d'entraînement (12), entre l'entraînement électromécanique (10) et la pompe hydrostatique (20) de telle façon que la première unité de réception (11) est raccordée à l'entraînement électromécanique (10) et la deuxième unité de réception (21) à la pompe hydrostatique (20) à travers la garniture mécanique (30) de manière étanche aux fluides l'une par rapport à l'autre au moins le long de l'arbre d'entraînement (12) rotatif.

2. Entraînement électrohydrostatique (1) selon la revendication 1, dans lequel la garniture mécanique (30) comprend une bague de glissement (31), un support de bague de glissement (32), un ressort poussoir (33) et une contre-bague (34), le ressort poussoir (33) exerçant une contre-pression sur le support de bague de glissement (32) de telle façon que la bague de glissement (31) soit appuyée le long de l'axe d'entraînement (12) rotatif de manière étanche aux fluides contre la contre-bague (34) au moyen de la contre-pression fournie à travers le support de bague de glissement (32).

3. Entraînement électrohydrostatique (1) selon l'une quelconque des revendications précédentes 1 à 2, dans lequel la pompe hydrostatique (20) comprend un connecteur (22) pour la réception en contrainte de l'arbre d'entraînement (12).

4. Entraînement électrohydrostatique (1) selon l'une quelconque des revendications précédentes 1 à 3, dans lequel la pompe hydrostatique (20) comprend une pression intérieure de boîtier située dans une plage de 4 à 30 bar, en particulier dans une plage de 10 à 25 bar, de préférence de 20 bar.

5. Système d'entraînement électrohydrostatique (2) comprenant au moins un entraînement électrohydrostatique (1) selon l'une quelconque des revendications précédentes 1 à 4 et un bloc de commande (3) pour la commande d'un actionneur (4).

6. Système d'entraînement électrohydrostatique (2) selon a revendication 5, dans lequel l'actionneur (4) est un cylindre hydraulique, en particulier un vérin différentiel.

7. Utilisation d'un système d'entraînement électrohydrostatique (2) selon la revendication 6 pour l'entraînement d'une vitesse rapide et/ou d'une vitesse de force d'un cylindre hydraulique et/ou d'un ensemble de pressage tel que, par exemple, une extrudeuse ou une presse d'emboutissage profond.
